# EUROPEAN PATENT SPECIFICATION

(11) **EP 2 944 766 B1**
(45) Date of publication and mention of the grant of the patent: **12.02.2020**
(21) Application number: 13870737.7
(22) Date of filing: 26.12.2013
(51) Int. Cl.: F01D 5/28, C04B 35/80, D03D 25/00, F01D 25/00, F02C 7/00, D03D 1/00, F01D 5/14, F01D 5/30

(54) **FIBER-REINFORCED TURBINE COMPONENT**
FASERVERSTÄRKTE TURBINENKOMPONENTE
COMPOSANT DE TURBINE RENFORCÉ DE FIBRE

(30) Priority: 11.01.2013 JP 2013003099
(43) Date of publication of application: 18.11.2015
(73) Proprietor: IHI Corporation, Tokyo 135-8710 (JP)
(72) Inventor: KAWANISHI, Ken, Tokyo 135-8710 (JP); NAKAMURA, Takeshi, Tokyo 135-8710 (JP); WATANABE, Fumiaki, Tokyo 135-8710 (JP)
(74) Representative: Carpmael, Robert Maurice Charles
(86) International application number: PCT/JP2013/084882
(87) International publication number: WO 2014/109246

(56) References cited:
- EP-A2- 2 149 711
- EP-A2- 2 423 441
- JP-A- 2005 201 244
- JP-A- 2005 240 797
- JP-A- 2008 151 117
- JP-A- 2012 522 937
- US-A- 5 375 978
- US-A1- 2012 055 609

## Description

### TECHNICAL FIELD

The present invention relates to a fiber-reinforced turbine component and, in particular, relates to a turbine rotor blade of a ceramic matrix composite including reinforcement fibers.

### BACKGROUND ART

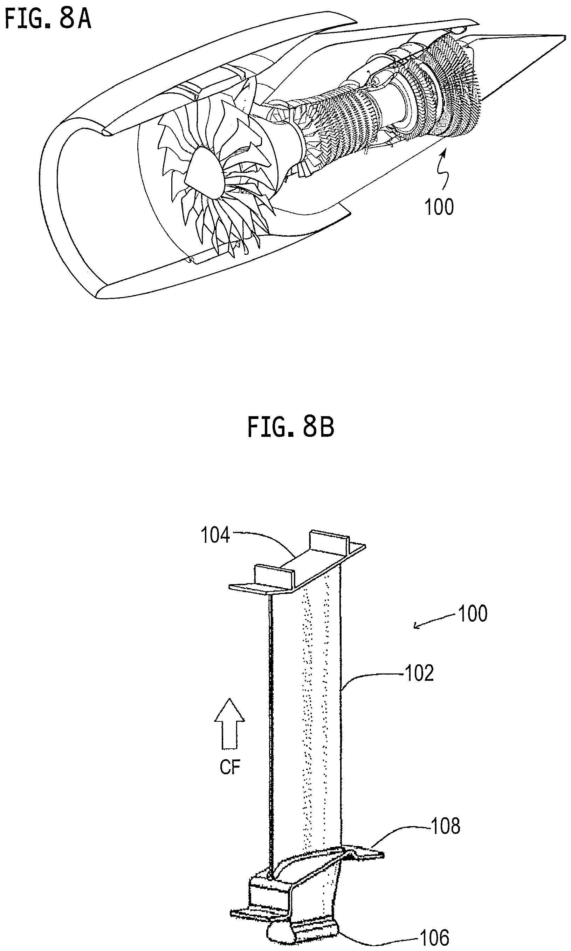

An aeronautic turbofan engine is, as exemplified in FIG. 8A, comprised of plural stages of turbines so as to extract energy from combustion gas, and each stage of the turbine is comprised of plural turbine blades arranged around a turbine disk. Each turbine blade 100 is, as exemplified in FIG. 8B, comprised of an airfoil section 102, a tip shroud section 104 surrounding it at its outside, a platform section 108 surrounding it at its inside, and a dovetail section 106 for coupling with the turbine disk, in general. Combustion gas flows through a space enclosed by the tip shroud sections 104 and the platform sections 108 and the airfoil sections 102 receives the gas to convert its energy into rotational energy and transmits the energy to the turbine disk. In consequence of the rotation, each turbine blade 100 receives centrifugal force CF.
As the turbine blades are exposed to high temperature of the combustion gas, applied thereto are materials having sufficient strength at high temperatures, which have been hitherto nickel-based alloys for example. In light of improvement in fuel consumption of aircrafts, use of ceramic matrix composites (CMC) has been under study in recent years, which can resist higher temperatures and are lighter in weight. CMC is a material in which reinforcement fibers of a ceramic are embedded in a matrix of a ceramic of the same or of a different kind. Production of a member of CMC is executed by weaving the reinforcement fibers to form a fabric and filling a matrix in between these fibers by an infiltration method or a gas-phase method. Patent Literatures 1, 2, 3 and 4 disclose related arts. Patent document 3 discusses a method of fabricating a composite material turbomachine blade having a platform incorporated therein using a complex weaving process.

### Citation List

### Patent Literature

PTL 1: US Patent 7510379
PTL 2: US Patent Application Publication 2009/0165924
PTL 3: US Patent Application Publication 2012/055609 A1
PTL 4: European Patent Application EP 2149711 A2

### SUMMARY

### TECHNICAL PROBLEM

As the fabric is thin, it is easy to produce a thin plate-like CMC member. A CMC member having a considerable thickness can be produced by piling up reinforcement fiber fabrics. Interlayers among the reinforcement fiber fabrics, however, lack connection by the reinforcement fibers. As high-strength of CMC depends largely on the reinforcement fibers, such sites are significantly inferior in strength and are therefore susceptible to exfoliation or shear failure.

The aforementioned problem requires special care in a case not of a simple plate-like member but of a complexly-shaped member. As the airfoil section has a shape close to a simple plate-like shape, it could be produced by orienting fibers in reinforcement fiber fabrics in a longitudinal direction and piling up the fabrics in a thickness direction perpendicular thereto. The fibers, as being oriented in the longitudinal direction run along the direction of the centrifugal force, provide sufficient strength against the force. On the other hand, the dovetail section needs to bulge in the width direction out of the airfoil section to engage with the turbine disk. Such a bulging structure could be produced by additionally piling up reinforcement fiber fabrics on the site in question. In the structure produced in this way, however, the centrifugal force acts on the dovetail section so as to shear the interface between the piled fabrics. It consequently raises some concerns that shear failure would occur.

The present inventors, as described above, found out that a source of the problem is to pile up the reinforcement fiber fabrics and has achieved the present invention by reaching a structure that can overcome this source of the problem.

### SOLUTION TO PROBLEM

According to an aspect of the present invention, a turbine component is comprised of: an airfoil section elongated in a longitudinal direction; a dovetail section continuous with an end of the airfoil section and bulging in a width direction across the longitudinal direction; a plurality of first reinforcement fibers running continuously from the airfoil section to the dovetail section; a plurality of second reinforcement fibers running at least partly in the width direction in the airfoil section; and a matrix joining an entirety of the first reinforcement fibers and the second reinforcement fibers, wherein the second reinforcement fibers are, in the airfoil section, woven into the first reinforcement fibers to form a three-dimensional fabric, and wherein the first reinforcement fibers are, in the dovetail section, not gathered in the width direction by other fibers but deploy in the width direction.

### ADVANTAGEOUS EFFECTS

A turbine component of a ceramic matrix composite can ensure sufficient strength even in a dovetail section.

### BRIEF DESCRIPTION OF DRAWINGS

FIG. 1 is a perspective view of a turbine rotor blade and a turbine disk according to an embodiment of the present invention.
FIG. 2 is a schematic sectional view of the turbine rotor blade, which exemplifies a pattern as to how reinforcement fibers run in an inner end of its airfoil section and a dovetail section.
FIG. 3 is a schematic sectional view of a turbine rotor blade according to another example.
FIG. 4 is a schematic sectional view of a turbine rotor blade according to still another example.
FIG. 5 is a schematic perspective view of a three-dimensional fabric of reinforcement fibers used in the present embodiment.
FIG. 6A is a schematic perspective view of an exemplary turbine rotor blade which contains an additional fabric of reinforcement fibers.
FIG. 6B is a sectional view of the turbine rotor blade, which is taken from the line VIB-VIB in FIG. 6A.
FIG. 7A is a schematic perspective view of a turbine rotor blade according to an example distinct from the example shown in FIG. 6A.
FIG. 7B is a sectional view of the turbine rotor blade, which is taken from the line VIIB-VIIB in FIG. 7A.
FIG. 8A is a perspective view of an aeronautic turbofan engine, in which the engine is partly cut out to show its internal structure.
FIG. 8B is a perspective view of a conventional turbine rotor blade.

### DESCRIPTION OF EMBODIMENTS

Exemplary embodiments will be described hereinafter with reference to the appended drawings.

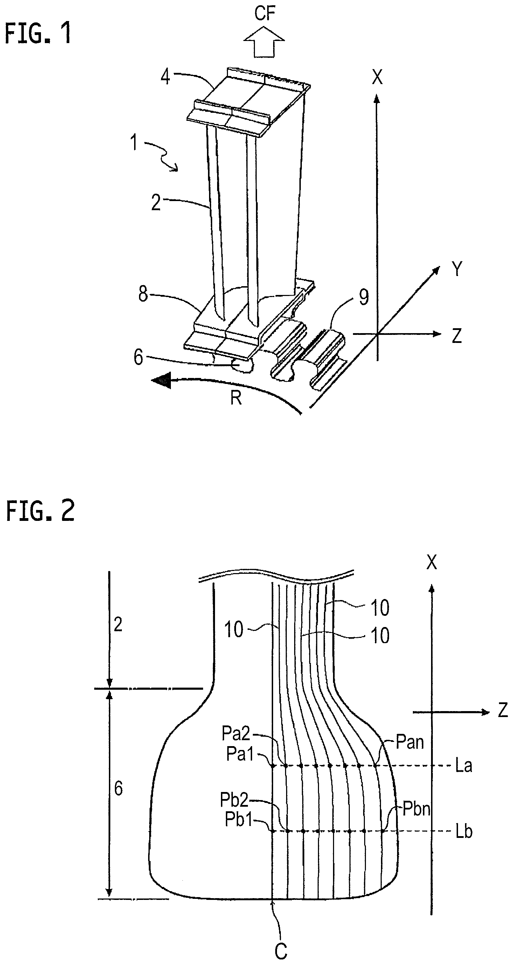

The present embodiment is applicable to a turbine component of a complex shape, such as a turbine rotor blade, but is applicable also to many various machine components that require high-temperature strength. The present embodiment will be described hereinafter with reference to an example of a turbine rotor blade 1 exemplified in FIG. 1.

Throughout the present specification and the appended claims, as a radial direction of a turbine is consistent with a longitudinal direction of the turbine rotor blade, this will be referred to as a longitudinal direction. Similarly, an axial direction of the turbine will be referred to as a depth direction and a tangential direction of rotation of the turbine will be referred to as a width direction. In the drawings and the following descriptions, signs X, Y and Z respectively indicate the longitudinal direction, the depth direction and the width direction. While these directions are shown to mutually cross at right angles in the examples of the drawings, the orthogonality is not essential in the present embodiment but they may cross obliquely.

Referring to FIG. 1, the turbine rotor blade 1 is comprised of an airfoil section 2 elongated in the longitudinal direction X, a tip shroud section 4 projecting from an outer end of the airfoil section 2 in the width direction Z, a platform section 8 projecting from an inner end of the airfoil section 2 in the width direction Z, a dovetail section 6 further projecting inward from the platform section 8. The dovetail section 6 is continuous with a lowermost end of the airfoil section 2 and bulges from the airfoil section 2 in the width direction Z to engage with a turbine disk 9 having a shape complementary thereto. A plurality of turbine rotor blades 1 receives combustion gas flow to, unitarily along with the turbine disk 9, make a rotational motion R. The rotational motion R causes that centrifugal force CF acts on the turbine rotor blade 1.

The turbine rotor blade 1 is, partly or totally, constituted of a ceramic matrix composite (CMC). Its entirety may be formed in a unitary body but at least the airfoil section 2 and the dovetail section 6 are formed in a unitary body of CMC.

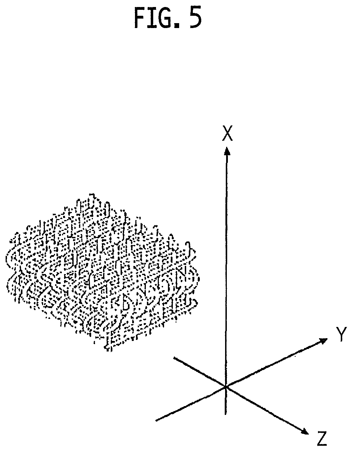

Its reinforcement fibers are, at least partly, three-dimensionally woven to form a three-dimensional fabric as exemplified in FIG. 5. A plurality of first reinforcement fibers 10 running in the longitudinal direction X is arranged in parallel at intervals both in the depth direction Y and the width direction Z and one or more second reinforcement fibers are woven therein to form the three-dimensional fabric. Because the second reinforcement fibers run at least partly in the width direction and also run in the depth direction Y, the CMC including this three-dimensional fabric has sufficient strength in all directions.

While the first reinforcement fibers 10 and the second reinforcement fibers are of any of silicon carbide fibers, carbon fibers, silicon nitride fibers, alumina fibers and boron nitride fibers, any proper ceramic is also applicable and the fibers may be any mixture of two or more of them. The first reinforcement fibers 10 and the second reinforcement fibers may be materially either identical or distinct.

A matrix joins the first reinforcement fibers 10 and the second reinforcement fibers together. To the matrix applicable is any ceramic, such as a ceramic identical to the first and second reinforcement fibers for example. An example of such a combination is silicon nitride fibers applied to the reinforcement fibers and silicon nitride applied to the matrix, and this is superior in high-temperature strength and weight reduction.

Referring to FIG. 2, the first reinforcement fibers 10 run continuously from the airfoil section 2 to the dovetail section 6. The second reinforcement fibers are, in the airfoil section 2, woven into the first reinforcement fibers 10 to form a three-dimensional fabric. The first reinforcement fibers 10 are, as being gathered or bundled up by the second reinforcement fibers, relatively thin in the width direction Z.

As described above, the first reinforcement fibers 10 stretch into and reaches the dovetail section 6 but do not form a three-dimensional fabric there. More specifically, the first reinforcement fibers 10 are not gathered or bundled up in the width direction Z by any fibers woven therein and therefore deploy in the width direction Z. Throughout the present specification and the appended claims, the term "deploy" means to unfold, to broaden spaces between the fibers, to expand in its lateral direction, and to spread. The dovetail section 6 thereby bulges in the width direction Z out of the airfoil section 2.

In the meantime, the first reinforcement fibers 10 may be independent of each other or form a plurality of two-dimensional fabrics. More specifically, the first reinforcement fibers 10 in the dovetail section 6 form a plurality of layers and the other reinforcement fibers running in the depth direction Y may weave into the respective layers of the first reinforcement fibers 10, so that each layer may forms a two-dimensional fabric bundled in the depth direction Y. To form the two-directional fabrics facilitates handling of the first reinforcement fibers 10.

The first reinforcement fibers 10 may be equally spaced in the width direction Z in both the airfoil section 2 and the dovetail section 6, from its center C to these surfaces. In FIG. 2 for example, intersection points Pa1, Pa2, ... Pan respectively in regard to an auxiliary line La are at equal intervals, and also intersection points Pb1, Pb2, ... Pbn respectively in regard to an auxiliary line Lb are at equal intervals. The first reinforcement fibers 10 run in the longitudinal direction X and substantially in parallel with each other, and further, as getting closer to the surfaces, approach more asymptotically to the surfaces.

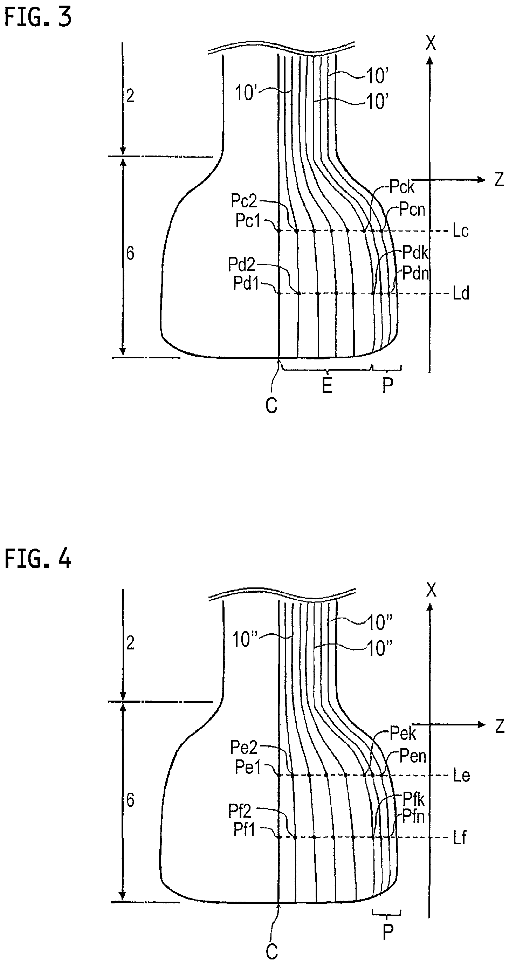

In the example as described above, any first reinforcement fiber 10, except for the most superficial fiber, is not parallel with the surfaces but may be, in the vicinity of the surfaces, made to run in parallel with the surfaces. In the example shown in FIG. 3, the first reinforcement fibers 10' in the vicinity P of the surface of the dovetail 6 (the k-th to n-th fibers), run in parallel with the surface but, at a site E closer to the center C (the 1st to (k-1)th fibers), run in non-parallel therewith. The first reinforcement fibers 10' are necessarily not at equal intervals. In the intersection points Pc1, Pc2, ... Pcn in regard to an auxiliary line Lc for example, the intersection points Pck, ... Pcn are at equal intervals and the intersection points Pc1, Pc2, ... are also at equal intervals but the intervals between the points Pc1, Pc2, ... are not equal to the intervals between the points Pck, ... Pcn. In the example in the drawing, the intervals between the points Pck, ... Pcn are relatively narrower but may be made broader. Intersection points Pd1, Pd2, ... Pdn in regard to an auxiliary line Ld are similarly at unequal intervals.

Sites closer to the surface in the dovetail section 6 are exposed to relatively large stress in a direction parallel with the surface. Therefore to place the first reinforcement fibers in parallel with the surface and to have the intervals between the first reinforcement fibers narrower in the vicinity of the surface are advantageous in strength improvement. More specifically, in these embodiments, a larger ratio of the first reinforcement fibers parallel with the surface (surface layers) is more advantageous in light of strength. An excessive ratio is, however, disadvantageous in maintenance of the structure of the dovetail section 6. Therefore a ratio ((n-k+1)x2)/(nx2-1)) of the number of the surface layers ((n-k+1)x2) to the number of the total layers (nx2-1) is preferably 20 to 50 %.

In the example as described above, the reinforcement fibers at the sites closer to the center C are at equal intervals but may be at unequal intervals even at these sites. In the example shown in FIG. 4, as with the example of FIG. 3, the first reinforcement fibers 10" in the vicinity P of the surface (the k-th to n-th fibers) run in parallel with the surface and the intersection points Pek, ... Pen and Pfk, ... Pfn in regard to auxiliary lines Le, Lf are respectively at equal intervals. On the other hand, the first reinforcement fibers 10" at sites closer to the center C (the 1st to (k-1)th fibers) run in non-parallel with the surface and the intervals get narrower as they get closer to the center C. More specifically, the intersection points Pe1, Pe2, ... and Pf1, Pf2, ... in regard to auxiliary lines Le, Lf are at unequal intervals. Further the first reinforcement fibers 10" in the vicinity of the surface may be also at unequal intervals. As sites closer to the center C are exposed to relatively large compression stress, to have the intervals between the first reinforcement fibers narrower is advantageous in resistance increase against the compression stress.

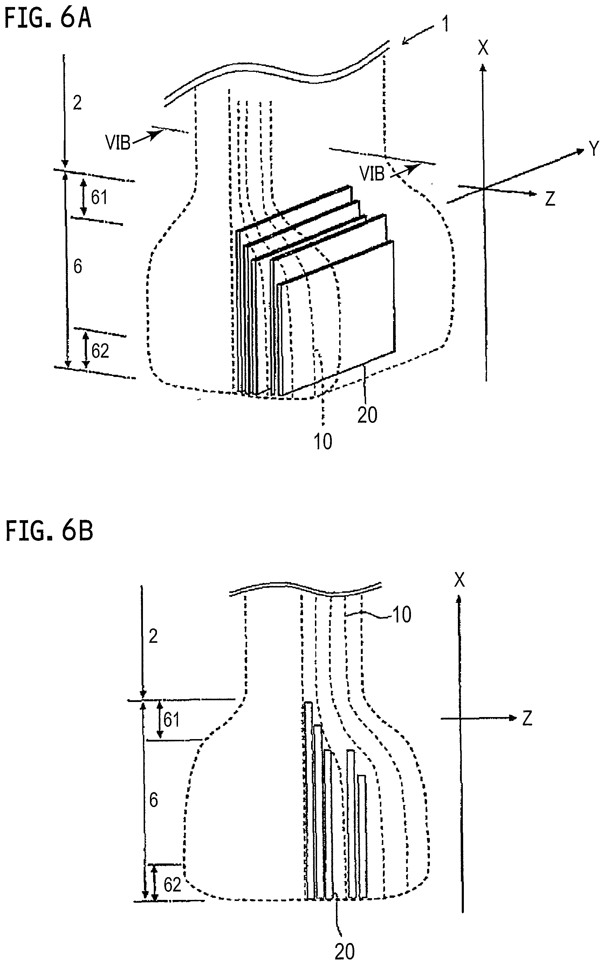

Referring to FIGs. 6A, 6B, in the dovetail section 6, a plurality of third reinforcement fibers 20 may intervene between the respective layers of the first reinforcement fibers 10. The third reinforcement fibers 20 may be of the same material as the first and second reinforcement fibers and also may be formed as either plate-like fabrics or a non-woven fiber bundles as shown in the drawing. This fabrics or non-woven fiber bundles are oriented in the direction along the depth direction Y and are put between the respective layers of the first reinforcement fibers 10, thereby serving to maintain a structure bulging out in the width direction Z. The lengths of the fabrics or non-woven fiber bundles may not be identical. It is possible to arrange fabrics or non-woven fiber bundles that are unequal in length at a site 61 to form a step-like structure as shown in the drawing. This is advantageous in maintenance of a structure gradually broadened downward at the site 61. Similarly a step-like structure may be formed at a site 62 in the vicinity of the lowermost end.

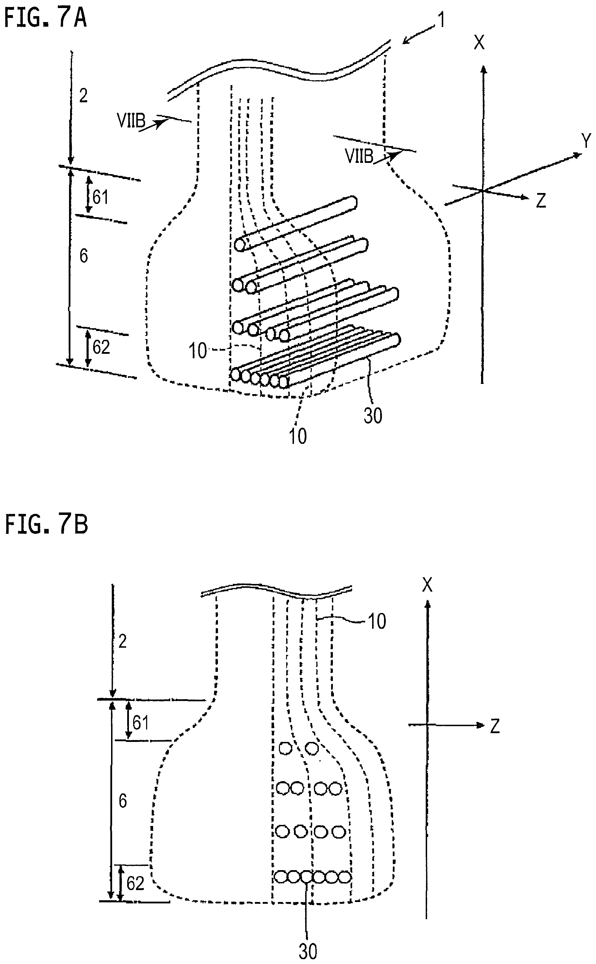

Referring to FIGs. 7A, 7B, the third reinforcement fibers intervening between the respective layers of the first reinforcement fibers 10 may not be the fabrics or non-woven fiber bundles, but may be a plurality of independent fibers 30. These plural fibers 30 are directed in the depth direction Y for example and are put between the respective layers of the reinforcement fibers 10. The plurality of reinforcement fibers 30 are arranged in parallel in the width direction Z. The number of the third reinforcement fibers 30 arranged in the width direction Z may not be constant but may have some difference between the upper site 61 and the lower end 62 of the dovetail section 6.

Larger ratios of the third reinforcement fibers 30 to the first reinforcement fibers 10 are advantageous in maintenance of the structure of the bulging dovetail section 6 but excessive ratios are disadvantageous in strength. Thus the volume ratio of the third reinforcement fibers to the first reinforcement fibers is preferably 1:2 to 3:1, and more preferably 1:1 to 2:1. Further at the lower end 62 of the dovetail section 6 (10 % of the dovetail section 6 in length in the longitudinal direction X), the ratio of the first reinforcement fibers 10 to the third reinforcement fibers is preferably 1:5 to 1:0.

The dovetail section 6 may include additional reinforcement fibers that are not woven into the first reinforcement fibers 10. For the purpose of facilities for handling the first reinforcement fibers 10 in the process of production, or for the purpose of preventing the third reinforcement fibers 30 from falling off, for example, any reinforcement fibers bundling them may run in the width direction Z, and may be, after being embedded, left in the matrix.

The turbine rotor blade 1 according to the present embodiment can be produced in the following way in general.

The three-dimensional fabric of the reinforcement fibers can be woven by any publicly known methods. For example, a plurality of layers of warps and wefts respectively of polycarbosilane is piled up and bias yarns are woven so as to pass through this layer stack. At one end of this three-dimensional fabric, the bias yarns are not woven therein by considerable length to make the warps deploy. The part forming the three-dimensional fabric is to be the airfoil section 2 and the part without the bias yarns woven therein is to be the dovetail section 6. The fabric may be in part made to branch off to form a part to be the tip shroud section 4 and a part to be the platform section 8.

By sintering this three-dimensional fabric having its end deploying, polycarbosilane is changed into silicon nitride to give a three-dimensional reinforcement fiber fabrics. Alternatively ceramic fibers made in advance may be woven into a three-dimensional fabric. The third reinforcement fibers may be made to intervene in the three-dimensional reinforcement fiber fabrics.

They are all in one let in a mold adapted for a shape of the turbine rotor blade 1 and are given pressure to be molded. Further a slurry-like matrix precursor is filled in the mold so that the precursor is infiltrated into the reinforcement fibers. Preferably they are kept in the mold and then heated to sinter the precursor. By sintering, ceramic is generated from the precursor, thereby forming the matrix joining the reinforcement fibers together.

Although what is described above is production by the infiltration method, the gas-phase method or any other method is instead applicable.

The present embodiment provides a turbine component reinforced with the fibers running continuously from the airfoil section to the dovetail section in the longitudinal direction. Because the fibers are not discontinuous between the airfoil section and the dovetail section, the turbine component has sufficient strength against the centrifugal force acting on the turbine component in the longitudinal direction. Further, because the dovetail section is free from a face susceptible to exfoliation or shear failure, the component, when engaging with the turbine disk to receive the centrifugal force, presents sufficient strength. Still further, if exfoliation or shear failure occurred at the dovetail section to form cracks, the reinforcement fibers would, as the fibers run also in the width direction in the airfoil section, resist progress of the cracks into the airfoil section. The turbine component according to the present embodiment is therefore unlikely to bring about fatal failure.

Although the invention has been described above by reference to certain embodiments of the invention, the invention is not limited to the embodiments described above, but only by the appended claims. Modifications and variations of the embodiments described above will occur to those skilled in the art, in light of the above teachings.

### INDUSTRIAL APPLICABILITY

A turbine component of a ceramic matrix composite having sufficient strength even in a dovetail section is provided.

## Claims

1. A turbine component (1) comprising:
an airfoil section (2) elongated in a longitudinal direction (X);
a dovetail section (6) continuous with an end of the airfoil section (2) and bulging in a width direction (Z) across the longitudinal direction (X);
a plurality of first reinforcement fibers (10) running continuously from the airfoil section (2) to the dovetail section (6);
a plurality of second reinforcement fibers running at least partly in the width direction (Z) in the airfoil section (2); and
a matrix joining an entirety of the first reinforcement fibers (10) and the second reinforcement fibers,
wherein, in the airfoil section (2), the second reinforcement fibers are woven into the first reinforcement fibers (10) to form a three-dimensional fabric, **characterized in that**, in the dovetail section (6), the first reinforcement fibers (10) are not gathered in the width direction (Z) by any other fibers but deploy in the width direction (Z).

2. The turbine component (1) of claim 1, wherein the first reinforcement fibers (10) are of one or more fibers selected from the group consisting of silicon carbide fibers, carbon fibers, silicon nitride fibers, alumina fibers and boron nitride fibers.

3. The turbine component (1) of claim 1, wherein the matrix is of any ceramic.

4. The turbine component (1) of claim 1, further comprising:
a plurality of third reinforcement fibers (20, 30) running through the first reinforcement fibers (10) in a depth direction (Y) across both the longitudinal direction (X) and the width direction (Z) in the dovetail section (6).

5. The turbine component (1) of claim 4, wherein the third reinforcement fibers (20, 30) constitute a fabric or a non-woven fiber bundle.

## Patentansprüche

1. Turbinenkomponente (1), die Folgendes umfasst:
eine Flügelsektion (2), die in einer Längsrichtung (X) langgestreckt ist,
eine Schwalbenschwanzsektion (6), die mit einem Ende der Flügelsektion (2) zusammenhängt und sich in einer Breitenrichtung (Z) quer zu der Längsrichtung (X) wölbt;
mehrere erste Verstärkungsfasern (10), die durchgehend von der Flügelsektion (2) zu der Schwalbenschwanzsektion (6) verlaufen;
mehrere zweite Verstärkungsfasern, die wenigstens teilweise in der Breitenrichtung (Z) in der Flügelsektion (2) verlaufen; und
eine Matrix, die eine Gesamtheit der ersten Verstärkungsfasern (10) und der zweiten Verstärkungsfasern verbindet,
wobei, in der Flügelsektion (2), die zweiten Verstärkungsfasern in die ersten Verstärkungsfasern (10) verwoben sind, um ein dreidimensionales Gewebe zu bilden, **dadurch gekennzeichnet, dass**, in der Schwalbenschwanzsektion (6), die ersten Verstärkungsfasern (10) nicht in der Breitenrichtung (Z) durch irgendwelche andere Fasern gesammelt werden, sondern sich in der Breitenrichtung (Z) entfalten.

2. Turbinenkomponente (1) nach Anspruch 1, wobei die ersten Verstärkungsfasern (10) aus einer oder mehreren Fasern bestehen, die ausgewählt sind aus der Gruppe, die aus Siliziumkarbidfasern, Kohlenstofffasern, Siliziumnitridfasern, Aluminiumoxidfasern und Bornitridfasern besteht.

3. Turbinenkomponente (1) nach Anspruch 1, wobei die Matrix aus einer beliebigen Keramik besteht.

4. Turbinenkomponente (1) nach Anspruch 1, die ferner Folgendes umfasst:
mehrere dritte Verstärkungsfasern (20, 30), die durch die ersten Verstärkungsfasern (10) in einer Tiefenrichtung (Y) quer zu sowohl der Längsrichtung (X) als auch der Breitenrichtung (Z) in der Schwalbenschwanzsektion (6) verlaufen.

5. Turbinenkomponente (1) nach Anspruch 4, wobei die dritten Verstärkungsfasern (20, 30) ein Gewebe oder ein Vliesstoff-Faserbündel darstellen.

## Revendications

1. Composant de turbine (1) comprenant :
une section de profil aérodynamique (2) allongée dans une direction longitudinale (X),
une section à queue d'aronde (6) continue avec une extrémité de la section de profil aérodynamique (2) et bombée suivant la direction de sa largeur (Z) transversalement à la direction longitudinale (X) ;
une pluralité de premières fibres de renfort (10) s'étendant de façon continue depuis la section de profil aérodynamique (2) jusqu'à la section en queue d'aronde (6) ;
une pluralité de secondes fibres de renfort s'étendant au moins en partie dans le sens de la largeur (Z) dans la section de profil aérodynamique (2) ; et
une matrice reliant une totalité des premières fibres de renfort (10) aux secondes fibres de renfort,
dans lequel, dans la section de profil aérodynamique (2), les secondes fibres de renfort sont tissées dans les premières fibres de renfort (10) pour former un tissu à trois dimensions, **caractérisé en ce que**, dans la section à queue d'aronde (6), les premières fibres de renfort (10) ne sont pas collectées dans le sens de la largeur (Z) par des quelconques autres fibres, mais se déploient dans le sens de la largeur (Z).

2. Composant de turbine (1) selon la revendication 1, dans lequel les premières fibres de renfort (10) sont une ou plusieurs fibres sélectionnées dans le groupe comprenant des fibres de carbure de silicium, des fibres de carbone, des fibres de nitrure de silicium, des fibres d'alumine et des fibres de nitrure de bore.

3. Composant de turbine (1) selon la revendication 1, dans lequel la matrice est constituée d'une quelconque céramique.

4. Composant de turbine (1) selon la revendication 1, comprenant en outre :
une pluralité de troisièmes fibres de renfort (20, 30) s'étendant au travers des premières fibres de renfort (10) dans une direction de profondeur (Y) et perpendiculairement à la direction longitudinale (X) et à la direction de largeur (Z) dans la section à queue d'aronde (6).

5. Composant de turbine (1) selon la revendication 4, dans lequel les troisièmes fibres de renfort (20, 30) constituent un faisceau de fibres de tissu ou de non-tissé.
